# EUROPÄISCHE PATENTSCHRIFT

(11) **EP 3 427 387 B1**
(45) Veröffentlichungstag und Bekanntmachung des Hinweises auf die Patenterteilung: **07.08.2019**
(21) Anmeldenummer: 17709025.5
(22) Anmeldetag: 01.03.2017
(51) Int. Cl.: H04B 1/00, H04W 28/02, H04W 28/10, H04L 12/801, G08G 1/16, H04L 12/707, H04B 1/08, H04B 1/3822, G08G 1/0967, H04B 7/26

(54) **STEUERVORRICHTUNG UND VERFAHREN ZUM KOPPELN EINER MULTI-STANDARD ANTENNENANORDNUNG EINES KRAFTFAHRZEUGS MIT ZUMINDEST EINER FAHRZEUGKOMPONENTE**
CONTROL DEVICE AND METHOD FOR COUPLING A MULTI-STANDARD ANTENNA ASSEMBLY OF A MOTOR VEHICLE TO AT LEAST ONE VEHICLE COMPONENT
DISPOSITIF DE COMMANDE ET PROCÉDÉ DE COUPLAGE D'UN DISPOSITIF D'ANTENNE MULTISTANDARD D'UN VÉHICULE À MOTEUR À AU MOINS UN COMPOSANT DE VÉHICULE

(30) Priorität: 11.03.2016 DE 102016002944
(43) Veröffentlichungstag der Anmeldung: 16.01.2019
(73) Patentinhaber: Audi AG, 85045 Ingolstadt (DE)
(72) Erfinder: VOIGT, Christoph, 85098 Großmehring (DE); VOLNHALS, Stefan, 85111 Adelschlag (DE); STÖCKL, Gerald, 80805 München (DE); EHRENTRAUT, Herbert, 92339 Beilngries (DE); RIPLINGER, Ralf, 85114 Buxheim (DE); PAPP, Aurel, 85123 Karlskron (DE); SPEHL, Jürgen, 85139 Wettstetten (DE)
(86) Internationale Anmeldenummer: PCT/EP2017/054783
(87) Internationale Veröffentlichungsnummer: WO 2017/153225

(56) Entgegenhaltungen:
- DE-A1-102008 061 304
- DE-A1-102013 214 946
- DE-A1-102014 211 013
- US-A1- 2007 253 402
- US-A1- 2013 114 606

## Beschreibung

Die Erfindung betrifft eine Steuervorrichtung und ein Verfahren zum Koppeln einer Antennenanordnung eines Kraftfahrzeugs mit zumindest einer Fahrzeugkomponente des Kraftfahrzeugs, um Nachrichten zwischen der zumindest einen Fahrzeugkomponente einerseits und fahrzeugexternen Objekten andererseits auszutauschen. Die Steuervorrichtung weist ein Funkmodul zum Bereitstellen einer Funkverbindung zu zumindest einem der Objekte auf.

Ein Fahrerassistenzsystem eines Kraftfahrzeugs kann eine Fahrerassistenzfunktionalität auf der Grundlage eines Nachrichtenaustauschs mit fahrzeugexternen Objekten bereitstellen. Eine solche Fahrerassistenzfunktionalität kann beispielsweise das Durchführen einer Selbstbremsung des Kraftfahrzeugs und/oder eines Lenkeingriffs sein. Die fahrzeugexternen Objekte können beispielsweise jeweils ein fremdes oder anderes Fahrzeug oder eine Infrastrukturkomponente, beispielsweise eine Ampel sein. Die Nachrichten können beispielsweise Meldungen auf der Grundlage des Car-2-Car-Standards sein (siehe z.B. die Internetseite www.car-2-car.org). Die Nachrichten können z.B. Positionsdaten und/oder relative Abstände beschreiben.

Hierbei stellt sich die Frage, welcher Funkstandard oder welche Funktechnologie zum Austauschen der Nachricht verwendet werden soll. Hierzu ist bekannt, als ein Funkmodul ein WLAN-Modul (WLAN - wireless local network) beispielsweise auf Grundlage des Standards IEEE802.11p zu verwenden. Es gibt aber auch die Möglichkeit, die Nachrichten auf der Grundlage eines LTE-Mobilfunkmoduls auszutauschen, was auch als LTE-Vehicle bezeichnet wird. Zusätzlich oder alternativ dazu kann der Standard 5G - Car2Car vorgesehen sein.

Aus der DE 10 2008 061 304 A1 ist eine Kommunikationseinrichtung für ein Fahrzeug zum drahtlosen Übertragen von fahrzeugrelevanten Daten an ein anderes Fahrzeug oder eine Infrastruktur bekannt. Es wird eine Zündschlüsselfunktechnik zusätzlich zu WLAN-basierter Kommunikation in einem Fahrzeug verwendet, um mit anderen Fahrzeugen zu kommunizieren. Hierbei werden mittels der Zündschlüsselfunktechnik nur ausgewählte Daten gesendet, die sich signifikant verändert haben. Die übrigen Daten werden nicht gesendet oder für die WLAN-Kommunikation aufgespart.

Aus der DE 10 2013 214 946 A1 ist eine Kommunikationsvorrichtung für ein Fahrzeug bekannt, das eine erste und eine zweite Kommunikationseinheit aufweist, wobei die erste Kommunikationseinheit ausgebildet ist, mit einem Server zu kommunizieren, mittels eines ersten Kommunikationsprotokolls und die zweite Kommunikationseinheit ausgebildet ist, mit mindestens einem weiteren Fahrzeug zu kommunizieren mittels eines zweiten Kommunikationsprotokolls.

Aus der DE 10 2014 211 013 A1 ist ein Fahrzeugkommunikationsgerät zum Übertragen einer Information über ein Verkehrsereignis an ein weiteres Fahrzeugkommunikationsgerät bekannt.

Aus der US 2013/0114606 A1 ist eine Hybridbnetzwerkvorrichtung bekannt, die eine Funktionalität zum Anzeigen der Sequenz von Paketen implementieren kann, die mit einem gewöhnlichen Paketstream über eine Mehrzahl von Paketrouten assoziiert sind.

Aus der US 2007/0253402 A1 ist ein Netzwerksystem mit einem Routing-Modul bekannt, wobei das Routing-Modul eine oder mehrere Netzwerknachrichten empfangen kann und die Netzwerknachrichten an das gewünschte Ziel leiten kann.

Insgesamt ergibt sich so das Problem, dass ein Kraftfahrzeug zum Bereitstellen der Fahrerassistenzfunktionalität auf der Grundlage von Nachrichten aus mehreren Objekten sicherstellen muss, dass Nachrichten mit allen Objekten ausgetauscht werden können, also die von den Objekten unterstützen unterschiedlichen Übertragungstechnologien verarbeitet werden können.

Ein weiteres Problem besteht dabei darin, dass die unterschiedlichen Übertragungstechnologien, also LTE-Vehicle, WLAN oder eine andere Car-2-Cartaugliche Übertragungstechnologie, unterschiedliche Verzögerungszeiten oder Übertragungszeiten aufweisen, sodass die gleichzeitige Koordination der Fahrerassistenzfunktionalität mit mehreren Objekten aufgrund unterschiedlicher Verzögerungen bei der Nachrichtenübertragung sichergestellt werden muss.

Der Erfindung liegt die Aufgabe zugrunde, einen Nachrichtenaustausch zwischen zumindest einer Fahrzeugkomponente einerseits und mehreren fahrzeugexternen Objekten anderseits auch bei gleichzeitiger Verwendung unterschiedlicher Übertragungstechnologien zeitlich zu koordinieren.

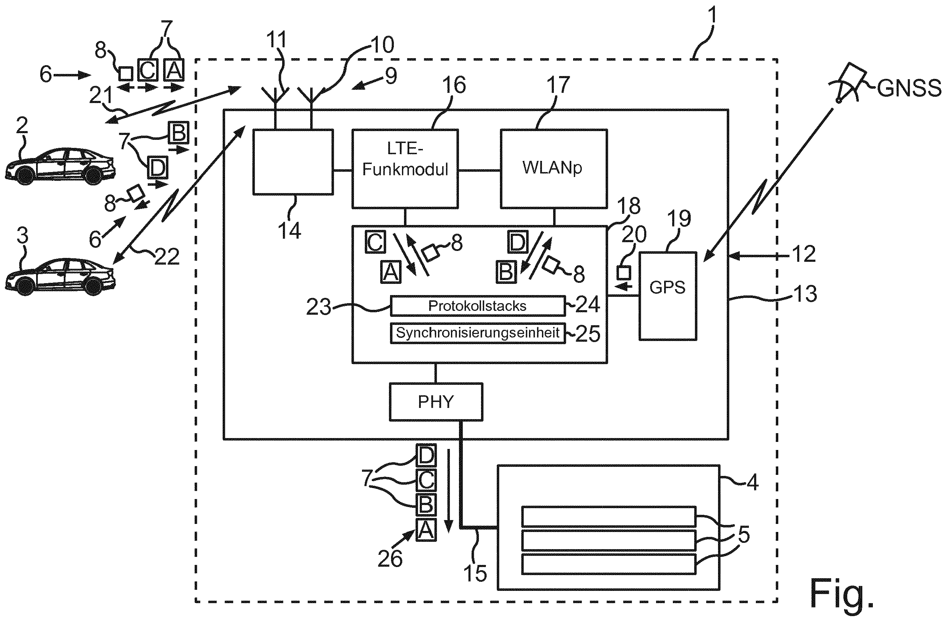

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Durch die Erfindung ist eine Steuervorrichtung zum Koppeln einer Antennenanordnung mit zumindest einer Fahrzeugkomponente eines Kraftfahrzeugs bereitgestellt. Die Steuervorrichtung ist zum Austausch von Nachrichten zwischen fahrzeugexternen Objekten einerseits und der zumindest einen Fahrzeugkomponente andererseits vorgesehen. Ein Austausch bedeutet hierbei zumindest das Empfangen von Nachrichten, bevorzugt das Senden und Empfangen von Nachrichten.

Hierzu weist die Steuervorrichtung eine Antennenanschlusseinrichtung zum Anschließen der Antennenanordnung sowie eine Netzwerkanschlusseinrichtung zum Koppeln der Steuervorrichtung mit der zumindest einen Fahrzeugkomponente auf. In der Steuervorrichtung sind zumindest zwei Funkmodule bereitgestellt. Ein erstes Funkmodul ist zum Bereitstellen einer ersten Funkverbindung zu zumindest einem der Objekte ausgestaltet, wobei die erste Funkverbindung auf der Grundlage eines ersten Funkstandards bereitgestellt wird. Das zweite Funkmodul ist zum Bereitstellen einer zweiten Funkverbindung zu zumindest einem der Objekte bereitgestellt, wobei die zweite Funkverbindung auf der Grundlage eines zweiten Funkstandards bereitgestellt wird, der von dem ersten Funkstandard verschieden ist. Die Funkverbindungen werden jeweils über die Antennenanordnung bereitgestellt.

Eine Prozessoreinrichtung der Steuervorrichtung ist dazu eingerichtet, zumindest eine der besagten Nachrichten über die erste Funkverbindung und zumindest eine andere der Nachrichten über die zweite Funkverbindung zu empfangen. Von den empfangenen Nachrichten sind also einige über die erste Funkverbindung und andere über die zweite Funkverbindung eingetroffen oder empfangen worden.

Um trotz verwendeter unterschiedlicher Funkstandards und der damit einhergehenden unterschiedlichen Übertragungsdauern die Nachricht zeitlich koordiniert an die zumindest eine Fahrzeugkomponente weiterleiten zu können, ist erfindungsgemäß vorgesehen, dass die Prozessoreinrichtung eine Synchronisierungseinheit aufweist, die dazu eingerichtet ist, zu jeder empfangenen Nachricht jeweils Zeitdaten zu ermitteln. Die Zeitdaten können z.B. eine Sendezeit oder eine Empfangszeit angeben. Die empfangenen Nachrichten werden in einer durch die Zeitdaten bestimmten Reihenfolge an die zumindest eine Fahrzeugkomponente weitergeleitet. Die beiden Funkmodule werden also gleichzeitig betrieben und empfangen abwechselnd Nachrichten über ihre jeweils bereitgestellte Funkverbindung.

Dabei kommen aber selbst solche Nachrichten, die gleichzeitig von jeweils einem der Objekte ausgesendet wurden, nicht auch tatsächlich gleichzeitig in der Prozessoreinrichtung an. Stattdessen kommt es zu Übertragungsverzögerungen, die vom jeweiligen Funkstandard abhängig sind. Die Prozessoreinrichtung ermittelt nun die besagten Zeitdaten. Diese können beispielsweise jeweils in der Nachricht enthalten sein. Die Zeitdaten können auch beispielsweise durch Erfassen eines jeweiligen Empfangszeitpunkts jeder Nachricht in der Steuervorrichtung selbst erzeugt werden. Die Synchronisierungseinheit gibt nun die Nachrichten in der zeitlich korrekten Reihenfolge an die zumindest eine Fahrzeugkomponente weiter. Die Reihenfolge wird anhand der Zeitdaten bestimmt. Hierdurch ist sichergestellt, dass eine Nachricht, die über einen schnelleren Funkstandard empfangen wurde eine über einen langsameren Funkstandard empfangene Nachricht nicht "überholt".

Durch die Erfindung ergibt sich somit der Vorteil, dass die zumindest eine Fahrzeugkomponente die aus den fahrzeugexternen Objekten empfangenen Nachrichten stets in der korrekten zeitlichen Reihenfolge empfängt und dies unabhängig von den verwendeten Funkstandards ermöglicht ist.

Durch den Betrieb der erfindungsgemäßen Steuervorrichtung ergibt sich das folgende erfindungsgemäße Verfahren. Das erste Funkmodul stellt die erste Funkverbindung über die Antennenanordnung zu zumindest einem der Objekte auf der Grundlage des ersten Funkstandards bereit. Währenddessen stellt das zweite Funkmodul eine zweite Funkverbindung über die Antennenanordnung zu zumindest einem anderen der Objekte auf der Grundlage des zweiten Funkstandards bereit. Die Prozessoreinrichtung empfängt in der beschriebenen Weise zumindest eine der Nachrichten über die erste Funkverbindung und zumindest eine andere der Nachrichten über die zweiten Funkverbindung. Die Synchronisierungseinheit der Prozessoreinrichtung ermittelt zu jeder empfangenen Nachricht jeweilige Zeitdaten und leitet die empfangenen Nachrichten in einer durch die Zeitdaten bestimmten Reihenfolge an die zumindest eine Fahrzeugkomponente weiter.

Zu der Erfindung gehören auch optionale Weiterbildungen, durch deren Merkmale sich zusätzliche Vorteile ergeben.

Wie bereits ausgeführt, ist die zeitliche Koordinierung insbesondere im Zusammenhang mit der Car-2-Car-Kommunikation vorteilsbringend. Entsprechend ist bevorzugt vorgesehen, dass die Steuervorrichtung dazu eingerichtet ist, als Nachrichten Car-2-Car-Meldungen und/oder Car-2-X-Meldungen mit zumindest einem anderen Fahrzeug und/oder zumindest einer Infrastrukturkomponente auszutauschen.

Bei dem ersten Funkmodul handelt es sich bevorzugt um ein Mobilfunkmodul, insbesondere ein LTE-Modul und/oder ein 5G-Modul. Das LTE-Modul und das 5G-Modul kann jeweils dazu ausgelegt sein, die erste Funkverbindung gemäß dem für die Car-2-Car-Kommunikation (Fahrzeug-zu-Fahrzeug-Kommunikation) vorgesehenen Standard LTE-Vehicle bzw. 5G-Car2Car bereitzustellen. In Bezug auf das zweite Funkmodul ist bevorzugt vorgesehen, dass dieses ein WLAN-Modul und/oder ein Bluetooth-Modul ist. Insbesondere handelt es sich um ein WLAN-Modul gemäß dem Standard IEEE 802.11p, der im Folgenden als WLANp bezeichnet ist. Ein Mobilfunkstandard und ein WLAN-Standard weisen einen besonders großen Unterschied in der Übertragungsdauer auf. Entsprechend ist durch die Steuervorrichtung in vorteilhafter Weise mittels der Synchronisierungseinheit auch hier der Unterschied in der Übertragungsdauer kompensiert oder ausgeglichen.

In Bezug auf die Netzwerkanschlusseinrichtung zum Koppeln der Steuervorrichtung mit der zumindest einen Fahrzeugkomponente ist bevorzugt vorgesehen, dass es sich um eine Ethernet-Anschlusseinrichtung handelt. Mit anderen Worten werden die Nachrichten gemäß dem Ethernet-Standard weitergeleitet. Hierdurch ergibt sich der Vorteil, dass die Reihenfolge der Nachrichten auch bei der Weiterleitung erhalten bleibt.

Um auch das Aussenden der Nachrichten mit den fahrzeugexternen Objekten zu koordinieren, ist bevorzugt eine Empfangseinrichtung zum Empfangen eines Signals eines GNSS (Globales Navigations Satelliten System), insbesondere des GPS (Global Positioning System), vorgesehen. Die Steuervorrichtung ist dabei dazu eingerichtet, einige der Nachrichten, nämlich die auszusendenden Nachrichten, mit solchen Zeitdaten auszusenden, die auf der Grundlage des Zeitsignals erzeugt sind. Mit anderen Worten kann jede der auszusendenden Nachrichten mit einem Zeitstempel auf Grundlage des Zeitsignals versehen oder ausgestattet werden.

Zum Empfangen und Senden der Nachrichten muss in der Prozessoreinrichtung ein Protokoll-Stack bereitgestellt sein, um die eigentlichen Nutzdaten noch mit zusätzlichen Übertragungsdaten zum Steuern der Übertragung zu ergänzen. Solche Übertragungsdaten sind beispielsweise eine Empfängeradresse und/oder eine Beschreibung des Datentyps der Nutzdaten. Bevorzugt ist hierbei vorgesehen, dass die Prozessoreinrichtung dazu eingerichtet ist, einen jeweiligen eigenen Protokoll-Stack für jedes Funkmodul oder jede Funkverbindung bereitzustellen. Hierdurch ergibt sich der Vorteil, dass Nachrichten, die über eine der Funkverbindungen eintreffen und eine hohe Datenrate aufweisen, den Empfang der Nachrichten, die über die andere Funkverbindung eintreffen, nicht beeinträchtigen oder blockieren können.

Bevorzugt ist vorgesehen, die beiden Funkmodule und die Prozessoreinrichtung in einem gemeinsamen Gehäuse bereitzustellen. Hierdurch ergibt sich der Vorteil, dass sich die Steuervorrichtung als einzelnes Bauteil nahe an der Antennenanordnung platzieren lässt.

Zu der Erfindung gehört auch ein Kraftfahrzeug mit einer Antennenanordnung und mit zumindest einer Fahrzeugkomponente, die dazu eingerichtet ist, zumindest eine Fahrerassistenzfunktionalität auf der Grundlage eines Nachrichtenaustauschs mit fahrzeugexternen Objekten bereitzustellen. Die Antennenanordnung kann eine einzelne Antenne oder auch mehrere Antennen umfassen. Die zumindest eine Fahrzeugkomponente kann jeweils beispielsweise als Fahrerassistenz-Steuergerät ausgestaltet sein. Als Fahrerassistenzfunktionalität kann beispielsweise eine Selbstbremsung und/oder ein Lenkeingriff und/oder eine Ausgabe eines Warnsignals für einen Fahrer des Kraftfahrzeugs vorgesehen sein, beispielsweise jeweils für den Fall, dass eines der Objekte einen vorbestimmten Mindestabstand zu dem Kraftfahrzeug unterschreitet. Bei dem erfindungsgemäßen Kraftfahrzeug sind die Antennenanordnung und die zumindest eine Fahrzeugkomponente über eine Ausführungsform der erfindungsgemäßen Steuervorrichtung gekoppelt. Hierdurch kann jede Fahrzeugkomponente mit den Objekten Nachrichten über zwei Funkverbindungen, die auf unterschiedlichen Funkstandard beruhen, austauschen.

Bevorzugt ist vorgesehen, dass die Antennenanordnung eine Dachantenne umfasst und die Steuervorrichtung in einem Abstand zu der Dachantenne angeordnet ist, der kleiner als 1,5 Meter, insbesondere kleiner als 1 Meter, ist. Mit anderen Worten ist die Steuervorrichtung bevorzugt im Dach des Kraftfahrzeugs verbaut, beispielsweise in ein Dach-Einbaumodul integriert. Hierdurch braucht nur die in Bezug auf EMV (elektromagnetische Verträglichkeit) robustere und/oder zuverlässigere Kopplung zwischen der Steuervorrichtung einerseits und der zumindest einen Fahrzeugkomponente andererseits über die längere Verbindungsstrecke erfolgen, während die in Bezug auf EMV kritischere Kopplung der Steuervorrichtung mit der Antennenanordnung, insbesondere der Dachantenne, über eine im Verhältnis dazu kürzere Leitung erfolgen kann, sodass Störstrahlung verringert ist. Über einen Verstärker in einer Antenne kann auch eine größere Entfernung zur Antenne überbrückt werden.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich beispielsweise um einen Kraftwagen, insbesondere um einen Personenkraftwagen, handeln kann. Des Weiteren sind fahrzeugexterne Objekte 2, 3 dargestellt, bei denen es sich beispielsweise jeweils um ein weiteres Fahrzeug oder eine Infrastrukturkomponente, wie beispielsweise eine Ampel oder ein Verkehrsschild, handeln kann. Im Folgenden sei angenommen, dass es sich um Fahrzeuge handelt.

Das Kraftfahrzeug 1 kann eine Fahrzeugkomponente 4 aufweisen, die eine oder mehrere Fahrerassistenzfunktionalitäten 5 bereitstellen kann. Beispielsweise kann es sich bei der Fahrzeugkomponente 4 um ein Fahrerassistenz-Steuergerät handeln. Die Fahrerassistenzfunktionalitäten 5 können beispielsweise eine Selbstbremsung und/oder einen Lenkeingriff und/oder die Ausgabe eines Warnhinweises umfassen. Die Fahrerassistenzfunktionalitäten 5 berücksichtigen hierbei die fahrzeugexternen Objekte 2, 3. Hierzu werden zwischen der Fahrzeugkomponente 4 und den fahrzeugexternen Objekten 2, 3 Nachrichten 6 ausgetauscht. Im Folgenden wird zwischen empfangenen Nachrichten 7, die aus den Objekten 2, 3 empfangen werden und an die Objekte 2, 3 ausgesendete Nachrichten 8 unterschieden.

Der Austausch der Nachrichten 6 kann über eine Antennenanordnung 9 des Kraftfahrzeugs 1 erfolgen, die beispielsweise eine Dachantenne 10 und optional eine zusätzliche Diversity-Antenne oder Hilfsantenne 11 umfassen kann. Die Fahrzeugkomponente 4 kann mit der Antennenanordnung 9 über eine Steuervorrichtung 12 gekoppelt sein, bei der es sich beispielsweise um ein einzelnes Bauteil mit einem Gehäuse 13 handeln kann. Die Antennenanordnung 9 kann an die Steuervorrichtung 12 über eine Antennenanschlusseinrichtung 14 angeschlossen sein. Hierbei kann die Anschlusseinrichtung 14 beispielsweise Koaxialanschlüsse für die Antennen 10, 11 der Antennenanordnung 9 aufweisen. Es kann beispielsweise ein Kreuzschalter für mehrere Antennen bereitgestellt sein.

Die Fahrzeugkomponente 4 kann über eine Netzwerkanschlusseinrichtung PHY der Steuervorrichtung 12 an diese angeschlossen sein. Bei der Netzwerkanschlusseinrichtung PHY kann es sich beispielsweise um eine Ethernet-Anschlusseinrichtung handeln, an welche ein Ethernet-Netzwerk 15 angeschlossen sein kann, an welches auch die Fahrzeugkomponente 4 gekoppelt sein kann. Insbesondere kann es sich um ein Gigabit-Ethernet handeln. Die Netzwerkanschlusseinrichtung PHY kann den physikalischen Anschluss und optional beispielsweise eine Treibereinrichtung zum Datenaustausch mit dem Ethernet-Netzwerk 15 aufweisen.

Um die Nachrichten 6 zwischen der Antennenanschlusseinrichtung 14 und der Netzwerkanschlusseinrichtung PHY zu übertragen, können in der Steuervorrichtung 12 ein erstes Funkmodul 16, ein zweites Funkmodul 17 und eine Prozessoreinrichtung 18 bereitgestellt sein. Des Weiteren kann eine Empfangseinrichtung 19 zum Empfangen eines Zeitsignals 20 eines GNSS bereitgestellt sein. Das GNSS kann beispielsweise das GPS sein, d.h. die Empfangseinrichtung 19 kann ein GPS-Empfänger GPS sein. Die Empfangseinrichtung 19 kann auch lediglich ein Anschluss zum Anschließen eines externen Empfängers für ein GNSS sein.

Die Funkmodule 16, 17 können zum Bereitstellen einer jeweiligen Funkverbindung 21, 22 gemäß einem unterschiedlichen Funkstandard ausgestaltet sein. Das erste Funkmodul 16 kann beispielsweise ein Mobilfunkmodul, beispielsweise ein LTE-Modul für eine LTE-Vehicle-Funkverbindung 21, sein. Das zweite Funkmodul 17 kann beispielsweise ein WLAN-Modul beispielsweise für den Standard WLANp zum Bereitstellen einer WLAN-Verbindung 22 sein.

Die empfangenen Nachrichten 7 aus den Objekten 2, 3 werden zu unterschiedlichen Zeitpunkten oder auch gleichzeitig von den Objekten 2, 3 ausgesendet. Im Folgenden sei angenommen, dass die Nachrichten 7 in der zeitlichen Reihenfolge von den Objekten 2, 3 ausgesendet werden, wie sie durch die Buchstaben A, B, C, D identifiziert ist. Die Zeitangaben A, B, C, D repräsentieren hier auch Zeitdaten, die z.B. in den Nachrichten 7 enthalten sein können. Die empfangenen Nachrichten 7 können von den jeweiligen Funkmodulen 16, 17 an einen Protokoll-Stack der Prozessoreinrichtung 18 übergeben werden. Beispielsweise kann jeder Protokoll-Stack 23, 24 ein jeweiliger Car-2-Car-Stack für eine Car-2-Car-Kommunikation sein. Die Protokoll-Stacks 23, 24 geben dann die Nachrichten 7 zwar jeweils in der korrekten Reihenfolge, also A,C, für den Protokoll-Stack 23 und B, D für den Protokoll-Stack 24, aus. Die Funkverbindungen 21, 22 und die Verarbeitung in den Funkmodulen 16, 17 kann allerdings aufgrund des verwendeten Funkstandards unterschiedlich lange Übertragungszeiten ergeben. Deshalb kann die absolute Reihenfolge aller empfangenen Nachrichten 7 hieraus nicht mehr ersehen werden.

Deshalb ist bei der Prozessoreinrichtung 18 eine Synchronisierungseinheit 25 (Sync) bereitgestellt. Die Synchronisierungseinheit 25 nimmt die empfangenen Pakete 7 aus den Protokoll-Stacks 23, 24 entgegen und ermittelt beispielsweise auf der Grundlage der Zeitdaten A, B, C, D innerhalb der Nachrichten 7, 8 eine absolute Reihenfolge 26, die den Aussendezeitpunkten der Nachrichten 7 entspricht. Die Synchronisierungseinheit 25 kann dann über die Netzwerkanschlusseinrichtung 14 die Nachrichten 7 insgesamt in einer zeitlich korrekten Reihenfolge 26 an die Fahrzeugkomponente 4 weiterleiten.

Die Protokoll-Stacks 23, 24 und die Synchronisierungseinheit 25 können beispielsweise jeweils Programmmodule der Prozessoreinrichtung 18 sein.

Um auch für die Objekte 2, 3 Zeitdaten in den ausgesendeten Nachrichten 8 bereitzustellen, die mit Zeitdaten anderer Sender, beispielsweise anderer Fahrzeuge, vergleichbar sind, kann durch die Prozessoreinrichtung 18 beim Aussenden der Nachrichten 8 auf der Grundlage des Zeitsignals 20 jede Nachricht 8 mit Zeitdaten, beispielsweise einem Zeitstempel, ergänzt werden. Dies kann beispielsweise durch die Protokoll-Stacks 23, 24 durchgeführt werden.

Somit ist insgesamt bei der Steuervorrichtung 12 eine Koexistenz von WLANp und LTE-Vehicle (5G-Vehicle-Car-2-Car-Modem) in einer Steuervorrichtung oder einem Steuergerät realisiert. Die zeitliche Synchronisation dieser beiden Kommunikationsmedien erfolgt durch den gemeinsamen Applikationsprozessor in Form der Prozessoreinrichtung 18. Durch Verortung und gemeinsame Verwendung des GPS-Empfängers 19 in der Steuervorrichtung 12 ist die zeitliche Synchronisation ohne Zeitversatz (Jitter) möglich.

Somit ist also eine echtzeitfähige Zeitsynchronisation für Funkverbindungen 21, 22 unterschiedlicher Funkstandards ermöglicht. Die Steuervorrichtung 12 kann dennoch kompakt gebaut sein und ist deshalb bevorzugt in der Nähe der Antennenanordnung 9 angeordnet, beispielsweise nahe der Dachantenne 10. Mit Nahe ist hierbei gemeint, dass ein Abstand kleiner als 1,5 Meter, insbesondere kleiner als 1 Meter, sein kann.

In dem zwei Funkmodule 16, 17 zugleich betrieben werden und gleichzeitig oder abwechselnd über die Antennenanordnung 9 Funkverbindungen 21, 22 betreiben, ist eine kombinierte Kommunikation sowohl mit anderen Kraftfahrzeugen, Infrastrukturkomponenten (Road side units) und Basisstationen von Mobilfunknetzwerken möglich.

Im Zusammenhang mit dem Austausch von Daten mit anderen Kraftfahrzeugen ist eine Sicherstellung der Car-to-Car-Kommunikation über unterschiedliche Funktechnologien, insbesondere WLANp und mobilfunkbasierter Technik in parallel möglich.

Insgesamt zeigt das Beispiel, wie durch die Erfindung ein Car-2-Car-Steuergerät mit Koexistenz von WLANp und LTE-Vehicle mittels eines gemeinsamen Applikationsprozessors bereitgestellt werden kann.

## Patentansprüche

1. Steuervorrichtung (12) zum Koppeln einer Antennenanordnung (9) eines Kraftfahrzeugs (1) mit zumindest einer Fahrzeugkomponente (4) des Kraftfahrzeugs (1) für einen Austausch von Nachrichten (6) mit fahrzeugexternen Objekten (2, 3), aufweisend:
- eine Antennenanschlusseinrichtung (14) zum Anschließen der Antennenanordnung (9),
- ein erstes Funkmodul (16) zum Bereitstellen einer ersten Funkverbindung (21) über die Antennenanordnung (9) zu zumindest einem der Objekte (2) auf der Grundlage eines ersten Funkstandards,
- eine Netzwerkanschlusseinrichtung (PHY) zum Koppeln der Steuervorrichtung (12) mit der zumindest einen Fahrzeugkomponente (4),
- ein zweites Funkmodul (17) zum gleichzeitigen Bereitstellen einer zweiten Funkverbindung (22) über die Antennenanordnung (9) zu zumindest einem anderen der Objekte (3) auf der Grundlage eines von dem ersten Funkstandard verschiedenen zweiten Funkstandards,
- eine Prozessoreinrichtung (18) zum Empfangen zumindest einer der Nachrichten (7) über die erste Funkverbindung (21) und zum Empfangen zumindest einer anderen der Nachrichten (7) über die zweite Funkverbindung (22), und
- eine Empfangseinrichtung (19) zum Empfangen eines Zeitsignals (20) eines Globalen Navigations-Satelliten Systems (GNSS),
**dadurch gekennzeichnet, dass**
- die Steuervorrichtung (12) dazu eingerichtet ist, einige der Nachrichten (8) mit Zeitdaten auszusenden, die auf der Grundlage des Zeitsignals (20) erzeugt sind;
wobei
- die Prozessoreinrichtung (18) eine Synchronisierungseinheit (25) aufweist, die dazu eingerichtet ist, zu jeder empfangenen Nachricht (7) jeweilige Zeitdaten (A, B, C, D) zu ermitteln, wobei die Zeitdaten durch Erfassen eines jeweiligen Empfangszeitpunkts jeder Nachricht in der Steuervorrichtung (12) erzeugt sind, und die empfangenen Nachrichten (7) in einer durch die Zeitdaten (A, B, C, D) bestimmten Reihenfolge (16) an die zumindest eine Fahrzeugkomponente (4) weiterzuleiten , und
- die Prozessoreinrichtung (18) dazu eingerichtet ist, einen jeweiligen eigenen Protokoll-Stack (23, 24) für jedes Funkmodul (16, 17) bereitzustellen.

2. Steuervorrichtung (12) nach Anspruch 1, wobei die Steuervorrichtung (12) dazu eingerichtet ist, als Nachrichten (6) Car-2-Car-Meldungen und/oder Car-2-X-Meldungen mit zumindest einem anderen Fahrzeug (2, 3) und/oder mit zumindest einer Infrastrukturkomponente auszutauschen.

3. Steuervorrichtung (12) nach einem der vorhergehenden Ansprüche, wobei das erste Funkmodul (16) ein Mobilfunkmodul und/oder das zweite Funkmodul (17) ein WLAN-Modul und/oder ein Bluetooth-Modul ist.

4. Steuervorrichtung (12) nach Anspruch 3, wobei das erste Funkmodul (16) ein LTE-Modul und/oder ein 5G-Modul ist.

5. Steuervorrichtung (12) nach Anspruch 3 oder 4, wobei das zweite Funkmodul (17) ein WLAN-Modul gemäß dem Standard IEEE 802.11p ist.

6. Steuervorrichtung (12) nach einem der vorhergehenden Ansprüche, wobei die Netzwerkanschlusseinrichtung (PHY) eine Ethernet-Anschlusseinrichtung ist.

7. Steuervorrichtung (12) nach einem der vorhergehenden Ansprüche, wobei die beiden Funkmodule (16, 17) und die Prozessoreinrichtung (18) in einem gemeinsamen Gehäuse (13) bereitgestellt sind.

8. Kraftfahrzeug (1) mit einer Antennenanordnung (9) und mit zumindest einer Fahrzeugkomponente (4), die dazu eingerichtet ist, zumindest eine Fahrerassistenzfunktionalität (5) auf der Grundlage eines Nachrichtenaustauschs mit fahrzeugexternen Objekten (2, 3) bereitzustellen, **dadurch gekennzeichnet, dass**
die Antennenanordnung (9) und die zumindest eine Fahrzeugkomponente (4) über eine Steuervorrichtung (12) nach einem der vorhergehenden Ansprüche gekoppelt sind.

9. Kraftfahrzeug (1) nach Anspruch 8, wobei die Antennenanordnung (9) eine Dachantenne (10) umfasst und die Steuervorrichtung (12) in einem Abstand zu der Dachantenne (10) angeordnet ist, der kleiner als 1,5 Meter ist.

10. Kraftfahrzeug (1) nach Anspruch 9, wobei der Abstand zu der Dachantenne (10) kleiner als ein Meter ist.

11. Verfahren zum Koppeln einer Antennenanordnung (9) eines Kraftfahrzeugs (1) mit zumindest einer Fahrzeugkomponente (4) des Kraftfahrzeugs (1) für einen Austausch von Nachrichten (6) mit fahrzeugexternen Objekten (2, 3), wobei ein erstes Funkmodul (16) eine erste Funkverbindung (21) über die Antennenanordnung (9) zu zumindest einem der Objekte (2) auf der Grundlage eines ersten Funkstandards bereitstellt, wobei
- währenddessen ein zweites Funkmodul (17) eine zweite Funkverbindung (22) über die Antennenanordnung (9) zu zumindest einem anderen der Objekte (3) auf der Grundlage eines von dem ersten Funkstandard verschiedenen zweiten Funkstandards bereitstellt, und
- eine Prozessoreinrichtung (18) einige der Nachrichten (7) über die erste Funkverbindung (21) und zumindest einige andere der Nachrichten (7) über die zweite Funkverbindung (22) empfängt, wobei
- eine Empfangseinrichtung (19) ein Zeitsignal (20) eines Globalen Navigations-Satelliten Systems (GNSS) empfängt, **dadurch gekennzeichnet, dass** die Steuervorrichtung (12) einige der Nachrichten (8) mit Zeitdaten aussendet, wobei die Zeitdaten durch Erfassen eines jeweiligen Empfangszeitpunkts jeder Nachricht in der Steuervorrichtung (12) und auf der Grundlage des Zeitsignals (20) erzeugt sind,
- eine Synchronisierungseinheit (25) der Prozessoreinrichtung (18) zu jeder empfangenen Nachricht (7) jeweilige Zeitdaten (A, B, C, D) ermittelt und die empfangenen Nachrichten (7) in einer durch die Zeitdaten (A, B, C, D) bestimmten Reihenfolge (16) an die zumindest eine Fahrzeugkomponente (4) weiterleitet, und
- die Prozessoreinrichtung (18) für jedes Funkmodul (16, 17) einen jeweiligen eigenen Protokoll-Stack (23, 24) bereitstellt.

## Claims

1. Control device (12) for coupling an antenna arrangement (9) of a motor vehicle (1) to at least one vehicle component (4) of the motor vehicle (1) for an exchange of messages (6) with off-board objects (2, 3), including:
- an antenna connection device (14) for connecting the antenna arrangement (9),
- a first radio module (16) for providing a first radio link (21) via the antenna arrangement (9) to at least one of the objects (2) on the basis of a first radio standard,
- a network connection device (PHY) for coupling the control device (12) to the at least one vehicle component (4),
- a second radio module (17) for simultaneously providing a second radio link (22) via the antenna arrangement (9) to at least one other of the objects (3) on the basis of a second radio standard differing from the first radio standard,
- a processor device (18) for receiving at least one of the messages (7) via the first radio link (21) and for receiving at least one other of the messages (7) via the second radio link (22), and
- a receiver device (19) for receiving a time signal (20) of a Global Navigation Satellite System (GNSS),
**characterised in that**
- the control device (12) is configured to transmit some of the messages (8) with time data, which are generated on the basis of the time signal (20);
wherein
- the processor device (18) includes a synchronisation unit (25) configured to determine respective time data (A, B, C, D) for each received message (7), wherein the time data are generated in the control device (12) through detection of a respective time of receipt of each message, and to forward the received messages (7) in a sequence (16) determined by the time data (A, B, C, D) to the at least one vehicle component (4), and
- the processor device (18) is configured to provide a respective dedicated protocol stack (23, 24) for each radio module (16, 17).

2. Control device (12) according to claim 1, wherein the control device (12) is configured to exchange car-2-car notifications and/or car-2-X notifications as messages (6) with at least one other vehicle (2, 3) and/or with at least one infrastructure component.

3. Control device (12) according to any of the preceding claims, wherein the first radio module (16) is a mobile radio module and/or the second radio module (17) is a WLAN module and/or a Bluetooth module.

4. Control device (12) according to claim 3, wherein the first radio module (16) is an LTE module and/or a 5G module.

5. Control device (12) according to claim 3 or 4, wherein the second radio module (17) is a WLAN module according to the IEEE 802.11p standard.

6. Control device (12) according to any of the preceding claims, wherein the network connection device (PHY) is an Ethernet connection device.

7. Control device (12) according to any of the preceding claims, wherein the two radio modules (16, 17) and the processor device (18) are provided in a shared housing (13).

8. Motor vehicle (1) having an antenna arrangement (9) and having at least one vehicle component (4) that is configured to provide at least one driver assistance functionality (5) on the basis of an exchange of messages with off-board objects (2, 3),
**characterised in that**
the antenna arrangement (9) and the at least one vehicle component (4) are coupled via a control device (12) according to any one of the preceding claims.

9. Motor vehicle (1) according to claim 8, wherein the antenna arrangement (9) comprises a roof antenna (10) and the control device (12) is situated at a distance to the roof antenna (10) that is less than 1.5 metres.

10. Motor vehicle (1) according to claim 9, wherein the distance to the roof antenna (10) is less than one metre.

11. Method for coupling an antenna arrangement (9) of a motor vehicle (1) to at least one vehicle component (4) of the motor vehicle (1) for an exchange of messages (6) with off-board objects (2, 3), wherein a first radio module (16) provides a first radio link (21) via the antenna arrangement (9) to at least one of the objects (2) on the basis of a first radio standard,
wherein
- meanwhile a second radio module (17) provides a second radio link (22) via the antenna arrangement (9) to at least one other of the objects (3) on the basis of a second radio standard differing from the first radio standard, and
- a processor device (18) receives some of the messages (7) via the first radio link (21) and at least some other of the messages (7) via the second radio link (22),
wherein
- a receiver device (19) receives a time signal (20) of a Global Navigation Satellite System (GNSS), **characterised in that** the control device (12) transmits some of the messages (8) with time data, wherein the time data are generated through detection of a respective time of receipt of each message in the control device (12) and on the basis of the time signal (20),
- a synchronisation unit (25) of the processor device (18) determines respective time data (A, B, C, D) for each received message (7) and forwards the received messages (7) in a sequence (16) determined by the time data (A, B, C, D) to the at least one vehicle component (4), and
- the processor device (18) provides a respective dedicated protocol stack (23, 24) for each radio module (16, 17).

## Revendications

1. Dispositif de commande (12) pour le couplage d'un dispositif d'antenne (9) d'un véhicule automobile (1) avec au moins un composant de véhicule (4) du véhicule automobile (1) pour un échange de messages (6) avec des objets externes au véhicule (2, 3), présentant :
- un dispositif de raccordement d'antenne (14) pour le raccordement du dispositif d'antenne (9),
- un premier module radio (16) pour la mise à disposition d'une première liaison radio (21) par le biais du dispositif d'antenne (9) avec au moins un des objets (2) sur la base d'une première norme radio,
- un dispositif de raccordement de réseau (PHY) pour le couplage du dispositif de commande (12) avec l'au moins un composant de véhicule (4),
- un second module radio (17) pour la mise à disposition simultanée d'une seconde liaison radio (22) par le biais du dispositif d'antenne (9) avec au moins un autre des objets (3) sur la base d'une seconde norme radio différente de la première norme radio,
- un dispositif de processeur (18) pour la réception d'au moins un des messages (7) par le biais de la première liaison radio (21) et pour la réception d'au moins un autre des messages (7) par le biais de la seconde liaison radio (22), et
- un dispositif de réception (19) pour la réception d'un signal temporel (20) d'un système global de navigation par satellite (GNSS),
**caractérisé en ce que**
- le dispositif de commande (12) est aménagé afin d'émettre quelques-uns des messages (8) avec des données temporelles qui sont générées sur la base du signal temporel (20) ;
dans lequel
- le dispositif de processeur (18) présente une unité de synchronisation (25) qui est aménagée afin de déterminer pour chaque message reçu (7) des données temporelles respectives (A, B, C, D), dans lequel les données temporelles sont générées par la détection d'un moment de réception respectif de chaque message dans le dispositif de commande (12), et de transmettre les messages reçus (7) dans un ordre (16) déterminé par les données temporelles (A, B, C, D) à l'au moins un composant de véhicule (4), et
- le dispositif de processeur (18) est aménagé afin de mettre à disposition une pile de protocole (23, 24) propre respective pour chaque module radio (16, 17).

2. Dispositif de commande (12) selon la revendication 1, dans lequel le dispositif de commande (12) est aménagé afin d'échanger comme messages (6) des messages car-2-car et/ou des messages car-2-X avec au moins un autre véhicule (2, 3) et/ou avec au moins un composant d'infrastructure.

3. Dispositif de commande (12) selon l'une quelconque des revendications précédentes, dans lequel le premier module radio (16) est un module radio mobile et/ou le second module radio (17) est un module WLAN et/ou un module Bluetooth.

4. Dispositif de commande (12) selon la revendication 3, dans lequel le premier module radio (16) est un module LTE et/ou un module 5G.

5. Dispositif de commande (12) selon la revendication 3 ou 4, dans lequel le second module radio (17) est un module WLAN selon la norme IEEE 802.11p.

6. Dispositif de commande (12) selon l'une quelconque des revendications précédentes, dans lequel le dispositif de raccordement de réseau (PHY) est un dispositif de raccordement Ethernet.

7. Dispositif de commande (12) selon l'une quelconque des revendications précédentes, dans lequel les deux modules radio (16, 17) et le dispositif de processeur (18) sont mis à disposition dans un boîtier commun (13).

8. Véhicule automobile (1) avec un dispositif d'antenne (9) et avec au moins un composant de véhicule (4) qui est aménagé afin de mettre à disposition au moins une fonctionnalité d'assistance au conducteur (5) sur la base d'un échange de message avec des objets externes au véhicule (2, 3),
**caractérisé en ce que**
le dispositif d'antenne (9) et l'au moins un composant de véhicule (4) sont couplés par le biais d'un dispositif de commande (12) selon l'une quelconque des revendications précédentes.

9. Véhicule automobile (1) selon la revendication 8, dans lequel le dispositif d'antenne (9) comporte une antenne de toit (10) et le dispositif de commande (12) est agencé à une distance de l'antenne de toit (10) qui est inférieure à 1,5 mètre.

10. Véhicule automobile (1) selon la revendication 9, dans lequel la distance à l'antenne de toit (10) est inférieure à un mètre.

11. Procédé de couplage d'un dispositif d'antenne (9) d'un véhicule automobile (1) avec au moins un composant de véhicule (4) du véhicule automobile (1) pour un échange de messages (6) avec des objets externes au véhicule (2, 3), dans lequel un premier module radio (16) met à disposition une première liaison radio (21) par le biais du dispositif d'antenne (9) avec au moins un des objets (2) sur la base d'une première norme radio,
dans lequel
- entre-temps un second module radio (17) met à disposition une seconde liaison radio (22) par le biais du dispositif d'antenne (9) avec au moins un autre des objets (3) sur la base d'une seconde norme radio différente de la première norme radio, et
- un dispositif de processeur (18) reçoit quelques-uns des messages (7) par le biais de la première liaison radio (21) et au moins quelque autre des messages (7) par le biais de la seconde liaison radio (22),
dans lequel
- un dispositif de réception (19) reçoit un signal temporel (20) d'un système global de navigation par satellite (GNSS), **caractérisé en ce que** le dispositif de commande (12) émet quelques-uns des messages (8) avec des données temporelles, dans lequel les données temporelles sont générées par détection d'un moment de réception respectif de chaque message dans le dispositif de commande (12) et sur la base du signal de données (20),
- une unité de synchronisation (25) du dispositif de processeur (18) à chaque message reçu (7) détermine des données temporelles respectives (A, B, C, D) et transmet les messages reçus (7) dans un ordre (16) déterminé par les données temporelles (A, B, C, D) à l'au moins un composant de véhicule (4), et
- le dispositif de processeur (18) pour chaque module radio (16, 17) met à disposition une pile de protocole propre respective (23, 24).
